# EUROPÄISCHE PATENTSCHRIFT

(11) **EP 2 596 220 B1**
(45) Veröffentlichungstag und Bekanntmachung des Hinweises auf die Patenterteilung: **20.08.2014**
(21) Anmeldenummer: 11729921.4
(22) Anmeldetag: 01.07.2011
(51) Int. Cl.: F02B 37/18, F01D 17/10, F16K 31/528

(54) **VORRICHTUNG ZUR BETÄTIGUNG EINER KLAPPE**
APPARATUS TO ACTUATE A VALVE
DISPOSITIF POUR ACTIONNER UNE VALVE

(30) Priorität: 19.07.2010 DE 102010031500
(43) Veröffentlichungstag der Anmeldung: 29.05.2013
(73) Patentinhaber: Bayerische Motoren Werke Aktiengesellschaft, 80809 München (DE)
(72) Erfinder: GRABHERR, Oliver, 81827 München (DE); EHRMANN, Stefan, 74570 Fichtenau (DE)
(86) Internationale Anmeldenummer: PCT/EP2011/003266
(87) Internationale Veröffentlichungsnummer: WO 2012/010252

(56) Entgegenhaltungen:
- EP-A1- 0 684 414
- EP-A2- 1 387 063
- WO-A1-2005/073606
- DE-A1-102008 021 748
- US-A- 2 999 666

## Beschreibung

Die Erfindung betrifft eine Vorrichtung zur Betätigung einer Klappe mit den Merkmalen aus dem Oberbegriff des Patentanspruchs 1, siehe beispielsweise auch DE 10 2008 021 748 A1, DE10 2004 005 001 A1, JP 2009. Die Erfindung setzt auf in Serie befindlichen Abgasturboladern auf, die die Ladedruckregelung mittels einer mit Unterdruck betätigten Wastegate-Klappe (Bypass-Klappe) umsetzen. Hierbei wird die in einer Unterdruckdose erzeugte Kraft über eine Stange auf die Wastegate-Klappe übertragen.

Zum technischen Umfeld wird beispielsweise auf die deutsche Offenlegungsschrift DE 100 27 668 A1 hingewiesen, von der diese Erfindung ausgeht. In dieser Offenlegungsschrift ist eine Vorrichtung zur Steuerung der Verdichter leistung eines an eine Brennkraftmaschine angeschlossenen Abgasturboladers beschrieben. Die Erfindung schlägt vor, ein Wastegate-Ventil mittels einer Bi-Druckdose zu öffnen und zu schließen, deren eine Druckkammer (Überdrucksteller) mit einer Druckquelle und deren andere Druckkammer (Unterdrucksteller) mit einer Saugpumpe verbunden sind. Die Erfindung hat den Vorteil, dass unabhängig vom Betriebszustand der Brennkraftmaschine stets der volle Stellbereich des Wastegate-Ventils, bzw. der Wastegate-Klappe genutzt werden kann. Dies hat insbesondere den Vorteil, dass bei Teillastbetrieb der Brennkraftmaschine ohne Ladedruckbedarf das Wastegate-Ventil vollständig geöffnet werden kann und dadurch Drossel- und Staudruckverluste verringert werden können.

Mit dieser gattungsgemäßen Ausgestaltung wird eine nahezu lineare Druck-Hubkurve über den gesamten Stellbereich erzielt.

Insbesondere bei einer Wastegate-Aktuatorik mittels Unterdruckansteuerung sind sowohl die in der Unterdruckdose erzeugte Kraft als in der Regel auch der Stangenhub des Aktuators stark begrenzt. Dies führt dazu, dass die Wastegate-Klappe in der Praxis nur geringe Öffnungswinkel ausführen kann und somit der Wastegate-Kanal strömungstechnisch nur eingeschränkt freigegeben werden kann. Unter gewissen Umständen und Anforderungen an das Abgas- und Aufladesystem kann es jedoch erforderlich sein, das Wastegate, oder auch Bypass genannt, sehr weit und somit über heute gebräuchliche maximale Öffnungswinkel hinaus zu öffnen.

So wird z. B. ein sehr schnelles Katalysatoranspringen, d. h. der Katalysator hat 50 % seiner Konvertierungstemperatur erreicht, (eine Voraussetzung der Realisierbarkeit zukünftiger Abgasnormen, wie z. B. EU6) dadurch erzielt, dass das heiße Abgas in den ersten Sekunden nach einem Brennkraftmaschinenstart durch das Wastegate direkt den Monolithen des Katalysators erreicht und dort gezielt den sog. Katalysator-Light-Off beschleunigt, ohne zu viel Enthalpie zu verlieren, wie dies auf dem Strömungspfad durch die Turbine des Abgasturboladers der Fall ist.

Eine dauerhafte Veränderung der Hebelverhältnisse ist zwischen dem inneren und dem äußeren Hebel der Wastegate-Klappe zur Vergrößerung des möglichen Öffnungsbereichs ist in der Regel zu diesem Zweck nur begrenzt zielführend, da die von der Aktuatorik zu erbringende Kraft in diesem Falle ansteigt. Gerade in diesem Bereich sind die Unterdrucksysteme, wie sie heute üblicherweise eingesetzt werden, stark limitiert. Da sich die maximale Kraft einer Unterdruckdose als Produkt des maximal möglichen Unterdrucks und der realisierbaren Membranfläche im Aktuator ergibt, werden schnell die Grenzen des Systems klar. Der maximale Unterdruck ist mit theoretisch 1 bar relativ (in der Praxis ca. 800 bis 900 mbar relativ) physikalisch begrenzt, die maximale Membranfläche bzw. der maximale Membrandurchmesser wird in der Regel durch den vorhandenen Bauraum vorgegeben und ist durch diesen limitiert. Da sich eine Membran bei gegebenem Durchmesser auch nur bis zu einem gewissen Grad verformen lässt, ist in der Folge auch der Hub der Aktuatorik limitiert.

Systeme mit Überdruckansteuerung können aufgrund der höheren realisierbaren relativen Drücke größere Kräfte aufbringen, sind jedoch im Hub gleichermaßen limitiert.

Systeme mit elektrischer Aktuatorik können zwar größere Kräfte bei gleichzeitig gesteigerten Hüben erreichen, jedoch baut der Aktuator mit integriertem Getriebe in der Regel deutlich größer als die oftmals verwendeten Unterdruck- bzw. Druckdosen.

Aufgabe der vorliegenden Erfindung ist es, eine Maßnahme aufzuzeigen, wie mit gleichem Hub der Aktuatorik größere Klappenwinkel bzw. größere Kräfte darstellbar sind.

Diese Aufgabe wird durch die Merkmale im kennzeichnenden Teil des Patentanspruchs 1 gelöst.
Als Maßnahme sieht die Erfindung eine "kulissengeführte" Steuerung für die Wastegate-Klappe vor. Die Erfindung zeichnet sich insbesondere dadurch aus, dass sie ein variables Hebelverhältnis am Wastegate-Hebel, dem Schwenkhebel, ermöglicht. Bei schließendem Wastegate-Hebel greift der Kraftangriffspunkt der Stellstange am Wastegate-Hebel mit größer werdendem Hebel an und ermöglicht dadurch eine hohe Schließ- bzw. Zuhaltekraft der Wastegate-Klappe. In der anderen Richtung, in der die Wastegate-Klappe öffnet, verringert sich der Hebel mit der Folge, dass mit dem Stellstangenhub ein gesteigerter Öffnungswinkel der Wastegate-Klappe erzielt werden kann. Durch eine geeignete Auslegung der Hebel- und Winkelverhältnisse einer solchen kinematischen Anordnung lassen sich die Kraft- und Hubverhältnisse dem jeweiligen Anwendungsfall entsprechend zielführend auslegen.

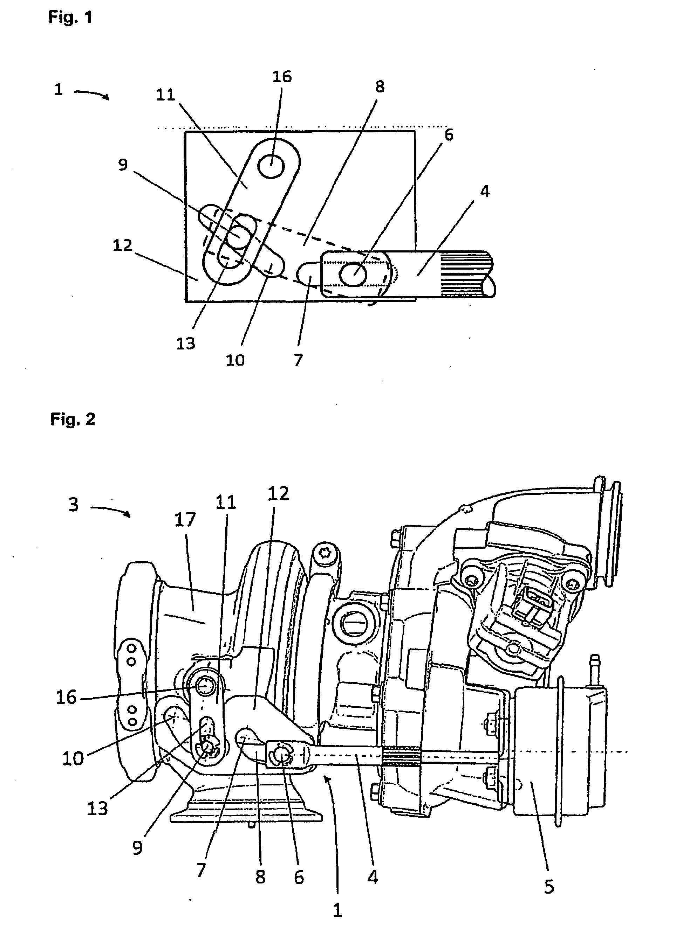

Je nach Randbedingungen und spezifischen Anforderungen an das System sind verschiedene kinematische Anordnungen denkbar. Das in Fig. 1 dargestellte System zeigt lediglich eine mögliche exemplarische Anordnung. Die Kulissen, in denen der Schlitten läuft, können wie dargestellt als separate Kulissen oder als eine durchgehend zusammenhängende Kulisse gestaltet werden. Die Kulissen können dabei in unterschiedlichen Ausführungsbeispielen gerade oder bogenförmig ausgeformt sein, oder gar in beliebigen Kurven dargestellt werden. Die Formgebung der Kulissen ist dabei eine Stellgröße, um die Hub-Winkel-Funktion, mit der der Aktuator die Wastegate-Klappe bewegt, zu beeinflussen.

Ebenfalls lässt sich die Hub-Winkel-Funktion durch den Abstand des ersten und des zweiten Bolzens am Schlitten beeinflussen, mit denen er in der oder den Kulissen läuft. Die Kraftangriffspunkte der Stellstange am Schlitten und des Schlittens am Schwenkhebel können völlig unabhängig von der Position der zwei Bolzen gewählt werden. In Fig. 1 sind die zwei Bolzen und die Kraftangriffspunkte deckungsgleich und können dadurch konstruktiv sehr leicht dargestellt werden, wodurch die Zahl der Bauteile und der Montageaufwand gering gehalten werden.

Weiterhin ist auch der Verzicht auf den Schlitten denkbar, indem die oben dargestellten Kraftangriffspunkte des Schlittens und der Stellstange am Schwenkhebel zusammengelegt und in einer gemeinsamen Kulisse geführt werden. Da jedoch in diesem Fall der Anschlusspunkt der Stellstange in der Kulissenführung selbst eine erhöhte Querbewegung zur Stangenachse ausführen muss, hätte dies damit eine höhere und ggf. die Lebensdauer reduzierende Belastung der Membran bzw. der Aktuatorik zur Folge. Um dies zu verhindern kann die Stellstange in einer weiteren Alternative axial geführt werden, so dass sie nicht quer zu ihrer Hauptbewegungsrichtung ausweichen kann. In diesem Fall kann der Kraftangriffspunkt der Stellstange ohne eigene Kulissenführung mit einem Hebel mit dem kulissengeführten Kraftangriffspunkt des Schwenkhebels verbunden werden.

In einer weiteren Ausführungsform können auch zwei oder mehr Schlitten vorgesehen werden, wodurch eine Stellbewegung der Klappe noch gezielter ausgelegt werden kann.

Auch die Wahl der Geometrie der Kulissen, die Position der Anschlusspunkte der Stellstange und des Schwenkhebels, der Abstand der Führungspunkte des oder der Schlitten(s), die übrigen Hebel- und Geometrieverhältnisse und die jeweiligen Winkeleinstellungen in verschiedenen Betriebspunkten orientieren sich an den Erfordernissen des auszulegenden Systems und sind bedarfsgerecht zu wählen.

Vorteilhafte Weiterbildungen der Erfindung sind den Unteransprüchen zu entnehmen.

Gemäß der Ausgestaltung nach Patentanspruch 2 kann in vorteilhafter Weise das variable Hebelverhältnis zwischen dem inneren und dem äußeren Hebel der Wastegate-Klappe realisiert werden.

Die Ausgestaltung gemäß Patentanspruch 3 ist eine besonders bevorzugte Ausführungsvariante, die unterschiedliche Kinematiken erlaubt.

Die Ausgestaltung gemäß Patentanspruch 4 verringert die Reibung in der Vorrichtung und reduziert den Verschleiß.

Die Ausgestaltung gemäß Patentanspruch 5 ist eine besonders bewährte Ausführungsform bezüglich der Kinematik, die gleichzeitig eine hohe mechanische Festigkeit aufweist.

Die Aktuatoren gemäß den Patentansprüchen 6 und 7 sind besonders bewährte Ausführungsvarianten.

Im Folgenden ist die Erfindung anhand von 2 Ausführungsbeispielen in 4 Figuren näher erläutert.
- Fig. 1: zeigt eine Aufsicht auf eine erfindungsgemäße Vorrichtung zur Betätigung einer Klappe für ein erstes Ausführungsbeispiel.
- Fig. 2: zeigt eine Aufsicht auf eine dreidimensional dargestellte Vorrichtung zur Betätigung einer Klappe für ein zweites Ausführungsbeispiel.
- Fig. 3: zeigt einen Schnitt durch einen Klappenarm einer erfindungsgemäßen Vorrichtung zur Betätigung einer Klappe.
- Fig. 4: zeigt einen Schnitt durch einen ersten Bolzen einer erfindungsgemäßen Vorrichtung zur Betätigung einer Klappe.

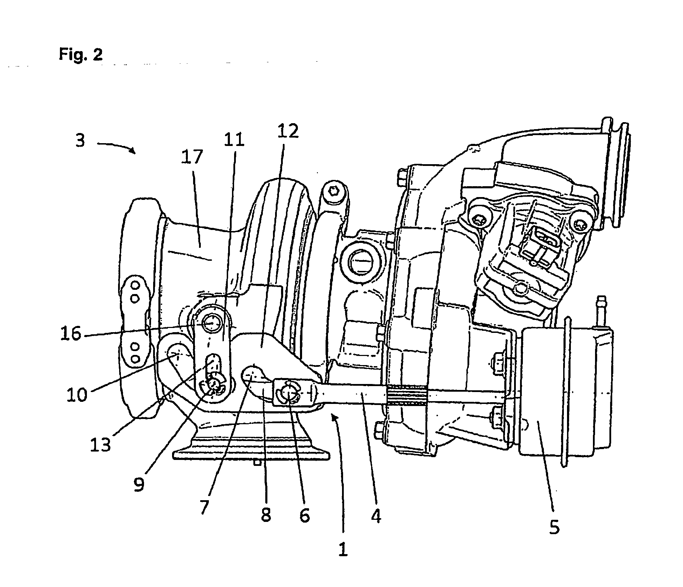

Fig. 1 zeigt eine Aufsicht auf eine erfindungsgemäße Vorrichtung 1 zur Betätigung einer Wastegate-Klappe in einem Abgasturbolader 3 für eine Brennkraftmaschine. Die Vorrichtung 1 besteht aus einer Stellstange 4, die von einem in Fig. 2 dargestellten Aktuator 5 weitgehend in axialer Richtung verschiebbar ist und die an ihrem dem Aktuator abgewandten Seite über einen ersten Bolzen 6 in einer erste Kulisse 7 geführt ist, wobei die erste Kulisse (7) ortsfest in einer Kulissenplatte (12) angeordnet ist. Weiter ist an dem ersten Bolzen 6 ein Schlitten 8 gelenkig angeordnet, die auf der dem ersten Bolzen 6 abgewandten Seite über einen zweiten Bolzen 9 in einer zweiten Kulisse 10 geführt ist, wobei an dem zweiten Bolzen 9 ein Schwenkhebel 11 gelenkig angeordnet ist. Der Schwenkhebel 11 ist auf der dem zweiten Bolzen 9 abgewandten Seite über einen Klappenarm 16 drehbar in einem Turbinengehäuse 17 eines Abgasturboladers 3 gelagert, wobei an dem Klappenarm 16 die Klappe 2 angebracht ist.

In diesem ersten Ausführungsbeispiel weist die Kulissenplatte 12 die erste Kulisse 7 und die zweite Kulisse 10 auf. Darüber hinaus weist der Schwenkhebel 11 für den zweiten Bolzen 9 eine dritte Kulisse 13 auf. In diesem ersten Ausführungsbeispiel sind die Kulissen 7, 10, 13 gerade ausgeführt, jedoch können auch die erste und/oder die zweite und/oder die dritte Kulisse 7, 10, 13 eine beliebige Kurvenform aufweisen.

In einem besonders bevorzugten Ausführungsbeispiel sind der erste und/oder der zweite Bolzen 6, 9 in der ersten und/oder der zweiten und/oder der dritten Kulisse 7, 10, 13 wälzgelagert, um die Reibung und somit den Verschleiß und die Stellkräfte zu verringern.

Bevorzugt sind die erste und die zweite Kulisse 7, 10 in der Kulissenplatte 12 angeordnet, die in bevorzugter Weise entweder Teil oder fest verbundenes Anbauteil des Turbinengehäuses 17 eines Abgasturboladers 3 ist.

Besonders bevorzugt wird der in Fig. 2 dargestellte Aktuator 5 pneumatisch oder elektromechanisch oder hydraulisch betätigt. Im Falle eines pneumatischen Aktuators 5 ist dieser bevorzugt ein Überdruck- oder ein Unterdruckaktuator.

In wiederum einem anderen Ausführungsbeispiel kann der Schlitten 8 auch zwischen der Stellstange 4, dem Schwenkhebel 11 und der Kulissenplatte 12 angeordnet sein.

Fig. 2 zeigt eine Aufsicht auf eine erfindungsgemäße Vorrichtung 1 zur Betätigung einer Klappe 2, die an einem Abgasturbolader 3 angeordnet ist. Prinzipiell handelt es sich in Fig. 2 um die gleiche Kinematik wie in Fig. 1, jedoch weist in diesem zweiten Ausführungsbeispiel die Kulissenplatte 12 eine gekrümmte erste Kulisse 7 sowie eine gekrümmte zweite Kulisse 10 auf. Dargestellt ist ebenfalls der Aktuator 5 zum Antrieb der Stellstange 4. Wie schon zu Fig. 1 ausgeführt, ist die Kulissenplatte 12 fest am Turbinengehäuse 17 des Abgasturboladers 3 angebracht.

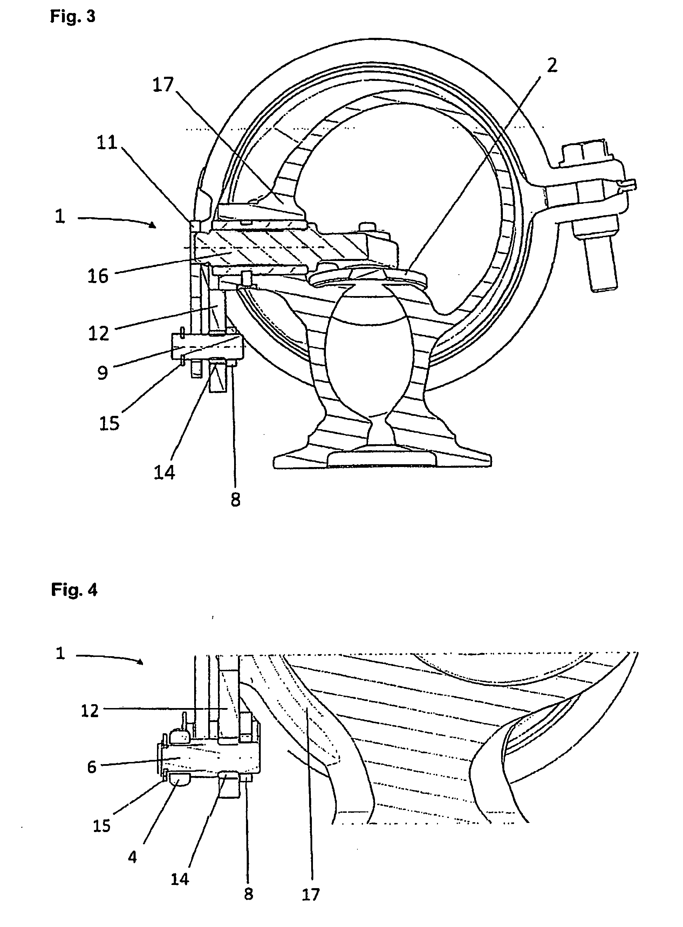

Fig. 3 zeigt einen Schnitt durch das Turbinengehäuse 17 und den Klappenarm 16 der erfindungsgemäßen Vorrichtung 1. Deutlich erkennbar ist in Fig. 3 die Wälzlagerung 14 für den zweiten Bolzen 9, der seinerseits mit einer Sicherung 15 gehalten ist. Weiter ist in Fig. 3 die dreilagige Ausführung der erfindungsgemäßen Vorrichtung 1 erkennbar. Auf der dem Turbinengehäuse 17 abgewandten Seite der Vorrichtung 1 befindet sich der Schwenkhebel 11, auf der dem Turbinengehäuse 17 zugewandten Seite befindet sich der Schlitten 8 und zwischen diesen befindet sich die Kulissenplatte 12, welche ortsfest zum Turbinengehäuse 17 ist. Wie bereits erwähnt, kann der Schlitten 8 auch zwischen der Stellstange 4, dem Schwenkhebel 11 und der Kulissenplatte 12 angeordnet werden.

Fig. 4 zeigt einen Schnitt durch den ersten Bolzen 6 sowie einen Teil des Turbinengehäuses 17. Auch der erste Bolzen 6 weist eine Sicherung 15 und wiederum ein Wälzlager 14 auf und die Kulissenplatte 12 ist ortsfest an das Turbinengehäuse 17 angeordnet.

Im Vergleich zu einer herkömmlichen Stangenaktuatorik lassen sich mit der Erfindung deutlich gesteigerte Klappenöffnungswinkel bei gleichem verwendeten Aktuator 5 darstellen. Auslegungsschwerpunkte bezüglich Kraft und Hub können je nach Randbedingungen und spezifischen Anforderungen an das System mit einem breiten Spektrum definiert und eingestellt werden. So kann beispielsweise angestrebt werden, im Schließpunkt der Wastegate-Klappe 2 günstige kinematische Verhältnisse für eine hohe übertragene Kraft zu erzielen (hohe Schließkraft bzw. Zuhaltekraft) während in der anderen Richtung ein großer Öffnungswinkel bei deutlich geringeren Anforderungen an die Betätigungskraft denkbar ist.

Kurz zusammengefasst ergeben sich insbesondere folgende Vorteile:
➢ Durch die kulissengeführte Steuerung lässt sich der maximale Öffnungswinkel der Wastegate-Klappe steigern;
➢ Trotz großen Öffnungswinkels sind hohe Schließkräfte erreichbar;
➢ Weitgehend leicht beeinflussbare Funktionskennlinie Winkel über Hub (von degressiv bis progressiv);
➢ Keine Elektrifizierung der Aktuatorik mittels elektrischem Wastegate-Steller erforderlich;
➢ Beschleunigtes Light-Off des Katalysators zur Erfüllung kommender Abgasnormen (z.B. EU6) möglich;
➢ Gesteigerte Entdrosselung der Turbine möglich;
➢ Erweiterung der applikativen Möglichkeiten bei der Umsetzung der Motorsteuerung;
➢ Gegenüber einem elektrischen Steller reduzierte Bauteilkosten;
➢ Heutige Serienkonstruktionen von Turboladern sind leicht auf einen erfindungsgemäßen Stand mit kulissengeführter Steuerung anpassbar.

### Bezugszeichenliste:

1. Vorrichtung
2. Klappe
3. Abgasturbolader
4. Stellstange
5. Aktuator
6. erster Bolzen
7. erste Kulisse
8. Schlitten
9. zweiter Bolzen
10. zweite Kulisse
11. Schwenkhebel
12. Kulissenplatte
13. dritte Kulisse
14. Wälzlager
15. Sicherung
16. Klappenarm
17. Turbinengehäuse

## Patentansprüche

1. Vorrichtung (1) zur Betätigung einer Wastegate-Klappe in einem Abgasturbolader (3) für eine Brennkraftmaschine, mit einer Stellstange (4), die von einem Aktuator (5) weitgehend in axialer Richtung verschiebbar ist und die an ihrem dem Aktuator (5) abgewandten Seite über einen ersten Bolzen (6) in einer ersten Kulisse (7) geführt ist, wobei
an dem ersten Bolzen (6) ein Schlitten (8) gelenkig angeordnet ist, der auf der dem ersten Bolzen (6) abgewandten Seite über einen zweiten Bolzen (9) in der ersten Kulisse (7) geführt ist, wobei an den zweiten Bolzen (9) ein Schwenkhebel (11) gelenkig angeordnet ist und der Schwenkhebel (11) auf der dem zweiten Bolzen (9) abgewandten Seite drehbar in einem Turbinengehäuse (17) gelagert ist und an den Schwenkhebel (11) auf der dem zweiten Bolzen (9) abgewandten Seite die Klappe (2) angeordnet ist, **dadurch gekennzeichnet, dass** die erste Kulisse (7) ortsfest in einer Kulissenplatte (12) angeordnet sind.

2. Vorrichtung nach Patentanspruch 1,
**dadurch gekennzeichnet, dass** der zweite Bolzen (9) in dem Schwenkhebel (11) in einer dritten Kulisse (13) gelagert ist.

3. Vorrichtung nach Patentanspruch 1 oder 2,
**dadurch gekennzeichnet, dass** die erste und/oder die dritte Kulisse (7, 13) eine Kurvenform aufweist.

4. Vorrichtung nach einem der Patentansprüche 1 bis 3,
**dadurch gekennzeichnet, dass** der erste und/oder der zweite Bolzen (6, 9) in der ersten und/oder der dritten Kulisse (7, 13) wälzgelagert ist.

5. Vorrichtung nach einem der zuvor genannten Patentansprüche,
**dadurch gekennzeichnet, dass** die erste Kulisse (7) aufgetrennt ist in die erste Kulisse (7) und eine zweite Kulisse (10).

6. Vorrichtung nach einem der zuvor genannten Patentansprüche,
**dadurch gekennzeichnet, dass** der Aktuator (5) pneumatisch oder elektromechanisch oder hydraulisch betätigbar ist.

7. Vorrichtung nach Patentanspruch 6,
**dadurch gekennzeichnet, dass** der Aktuator (5) ein Überdruck- oder ein Unterdruckaktuator ist.

## Claims

1. A device (1) for actuating a wastegate valve (bypass valve) in a turbocharger (3) for an internal combustion engine, comprising an adjusting rod (4) movable substantially in the axial direction by an actuator (5) and, at its side remote from the actuator (5), guided by a first pin (6) in a first sliding link (7) wherein
a slide (8) is pivotably mounted on the first pin (6) and guided in the first sliding link by a second pin (9) in the first sliding link (7) on the side remote from the first pin (6), wherein a pivoted lever (11) is pivotably mounted on the second pin (9) and is mounted in a turbine casing (17) on the side remote from the second pin (9), and the valve (2) is disposed on the pivoted lever (11) on the side remote from the second pin (9), **characterised in that** the first sliding link (7) is non-displaceably disposed in a slide plate (12).

2. A device according to claim 1,
**characterised in that** the second pin (9) is mounted in a third sliding link (13) in the pivoted lever (11).

3. A device according to claim 1 or claim 2,
**characterised in that** the first and/or the third sliding link (7, 13) is curved.

4. A device according to any of claims 1 to 3,
**characterised in that** the first and/or the second pin (6, 9) is mounted on a rolling bearing in the first and/or the third sliding link (7, 13).

5. A device according to any of the previously-mentioned claims,
**characterised in that** the first sliding link (7) is divided into the first sliding link (7) and a second sliding link (10).

6. A device according to any of the previously-mentioned claims, **characterised in that** the actuator (5) is pneumatically or electromechanically or hydraulically actuated.

7. A device according to claim 6,
**characterised in that** the actuator (5) is an excess-pressure or a negative-pressure actuator.

## Revendications

1. Dispositif (1) permettant d'actionner un clapet de soupape de décharge dans un turbocompresseur de gaz d'échappement (3) d'un moteur à combustion interne comportant une tige de réglage (4) qui peut être largement déplacée en translation en direction axiale par un actionneur (5) et qui est guidée sur sa face située à l'opposé de l'actionneur (5), dans une première coulisse (7), par un premier goujon (6), dans lequel,
sur le premier goujon (6) est articulé un coulisseau (8) qui est guidé par un second goujon (9), dans la première coulisse (7) sur sa face située à l'opposé du premier goujon (6), sur le second goujon (9) étant articulé un levier pivotant (11), monté mobile en rotation dans une enveloppe de turbine (17) sur son côté situé à l'opposé du second goujon (9), et, le clapet (2) étant monté sur le levier pivotant (11), sur le côté situé à l'opposé du second goujon (9),
**caractérisé en ce que**
la première coulisse (7) est positionnée fixe dans une plaque de coulisse (12).

2. Dispositif conforme à la revendication 1,
**caractérisé en ce que**
le second goujon (9) est monté dans le levier pivotant (11) dans une troisième coulisse (13).

3. Dispositif conforme à la revendication 1 ou 2,
**caractérisé en ce que**
la première et/ou la troisième coulisse (7, 13) a/ont une forme courbe.

4. Dispositif conforme à l'une des revendications 1 à 3,
**caractérisé en ce que**
le premier et/ou le second goujon(s) (6, 9) est/sont monté(s) sur palier à roulement dans la première et/ou la troisième coulisse (7, 13) .

5. Dispositif conforme à l'une des revendications précédentes,
**caractérisé en ce que**
la première coulisse (7) est subdivisée en la première coulisse (7) et une seconde coulisse (10).

6. Dispositif conforme à l'une des revendications précédentes,
**caractérisé en ce que**
l'actionneur (5) est à actionneur pneumatique ou électromécanique ou hydraulique.

7. Dispositif conforme à la revendication 6,
**caractérisé en ce que**
l'actionneur (5) est à actionneur à surpression ou à dépression.
